# EUROPÄISCHE PATENTSCHRIFT

(11) **EP 4 408 711 B1**
(45) Veröffentlichungstag und Bekanntmachung des Hinweises auf die Patenterteilung: **18.02.2026**
(21) Anmeldenummer: 22777615.0
(22) Anmeldetag: 09.09.2022
(51) Int. Cl.: B60T 7/12, B60T 8/1755, B60T 8/18, B60T 8/24, B60T 8/72, B60T 8/74, B60T 13/74

(54) **EINRICHTUNG UND VERFAHREN ZUR VERHINDERUNG EINES WEGROLLENS EINES GEPARKTEN FAHRZEUGS**
DEVICE AND METHOD FOR PREVENTING A PARKED VEHICLE FROM ROLLING AWAY
DISPOSITIF ET PROCÉDÉ POUR EMPÊCHER UN VÉHICULE STATIONNÉ DE S'ÉLOIGNER

(30) Priorität: 28.09.2021 DE 102021210786
(43) Veröffentlichungstag der Anmeldung: 07.08.2024
(73) Patentinhaber: Schaeffler Technologies AG & Co. KG, 91074 Herzogenaurach (DE)
(72) Erfinder: ZHANG, Hong, 80687 München (DE)
(74) Vertreter: Schaeffler Technologies
(86) Internationale Anmeldenummer: PCT/EP2022/075051
(87) Internationale Veröffentlichungsnummer: WO 2023/052079

(56) Entgegenhaltungen:
- DE-A1- 10 301 824
- DE-A1- 102005 027 843
- DE-A1- 102017 005 881
- DE-A1- 102017 212 364
- DE-A1- 102018 133 223
- DE-A1- 102020 202 167
- FR-A1- 3 097 510

## Beschreibung

Die vorliegende Erfindung betrifft eine Einrichtung und ein Verfahren zur Verhinderung eines Wegrollens eines geparkten Fahrzeugs, insbesondere Elektro- oder Hybridfahrzeugs, sowie ein Fahrzeug, das die Einrichtung aufweist.

Die in Fahrzeugen herkömmlich verwendete, als mechanische Feststellbremse bzw. Handbremse ausgebildete Blockiereinrichtung, die dazu vorgesehen ist, ein oder mehrere Räder des Fahrzeugs in einem Parkzustand des Fahrzeugs dauerhaft zu blockieren, um ein Wegrollen des geparkten Fahrzeugs zu verhindern, wird insbesondere in Elektro- und Hybridfahrzeugen häufig durch eine durch eine elektronische Ansteuerung aktivierbare Parkbremse bzw. Feststellbremse ersetzt.

Um zu verhindern, dass das Fahrzeug im Falle einer Fehlfunkton der durch eine elektronische Ansteuerung aktivierbaren Parkbremse wegrollt, werden häufig zwei als durch elektronische Ansteuerung aktivierbare Parkbremsen ausgebildete Blockiereinrichtungen in einem Fahrzeug verbaut, wobei eine dieser Parkbremsen als redundante Parkbremse dient. Hierbei kann beispielsweise in Fahrzeugen, die ein Automatikgetriebe aufweisen, eine der beiden durch elektronische Ansteuerung aktivierbaren Parkbremsen durch eine durch elektronische Ansteuerung aktivierbare Parksperre ersetzt werden.

Die DE 10 2020 202 167 A1 offenbart ein Gespann mit einem Anhänger mit eigenem elektrischen Fahrantrieb und einem elektrischen Energiespeicher und mit einem mittels einer Kupplungsvorrichtung mit dem Anhänger verkuppelbaren Zugfahrzeug, wobei der Fahrantrieb mindestens einen selbsthemmungsfreien, mittels einer Steuervorrichtung steuerbaren Elektromotor aufweist, mit dem direkt oder indirekt mindestens ein Anhängerrad gesteuert antreibbar ist. Die Steuervorrichtung weist eine aktivierbare Steuerfunktionseinheit als Fahr-Steuereinheit für eine Funktion "elektrischer Fahrantrieb" und eine von der Fahr-Steuereinheit getrennt aktivierbare Steuerfunktionseinheit als Mover-Steuereinheit für eine Funktion "elektrischer Rangierantrieb" auf. Das Gespann weist eine Verkupplungs-Erkennungseinrichtung auf, die bei einer festgestellten Verkupplung zwischen Anhänger und Zugfahrzeug ein Verkupplungssignal an die Steuervorrichtung abgibt und nur beim Vorliegen des Verkupplungssignals die Fahr-Steuereinheit aktivierbar ist. Zudem ist nur bei einem nicht verkuppelten Anhänger und einem nicht vorliegenden Verkupplungssignal und damit einer nicht aktivierbaren Fahrsteuereinheit die Mover-Steuereinheit aktivierbar.

Die DE 10 2017 005 881 A1 offenbart ein Bremssystem eines Elektrofahrzeugs oder Hybridfahrzeugs, welches mindestens zwei Antriebsräder und mindestens zwei lenkbare Räder aufweist, von denen wenigstens zwei Räder mittels zumindest einer elektromotorisch und generatorisch betreibbaren Elektromaschine antreibbar sind, und welches eine fluidische Bremsvorrichtung aufweist, welche mittels Bremsaktuatoren auf zumindest zwei Räder diese abbremsend einwirken kann. Die fluidische Bremsvorrichtung weist nur einen Bremskreis auf, der mit den Bremsaktuatoren an allen Rädern verbunden ist, wobei die wenigstens eine Elektromaschine derart ausgebildet ist und betrieben werden kann, dass sie bei einer Störung in der fluidischen Bremsvorrichtung als Notfall-Betriebsbremse betätigt werden kann, wobei die fluidische Bremsvorrichtung sowie die mindestens eine Elektromaschine derart ausgebildet sind, dass diese das Elektrofahrzeug oder das Hybridfahrzeug bis zum Stillstand abbremsen können.

Eine Aufgabe einer Ausführung der vorliegenden Erfindung ist es, eine Einrichtung und ein Verfahren zur Verhinderung eines Wegrollens eines geparkten Fahrzeugs zu verbessern.

Diese Aufgabe wird durch eine Einrichtung zur Verhinderung eines Wegrollens eines geparkten Fahrzeugs mit den Merkmalen des Anspruchs 1 gelöst. Die Ansprüche 11 bis 19 stellen ein Verfahren, und der Anspruch 10 ein Fahrzeug unter Schutz.

Nach einer Ausführung der vorliegenden Erfindung weist eine Einrichtung zur Verhinderung eines Wegrollens eines geparkten Fahrzeugs, insbesondere Elektro- oder Hybridfahrzeugs, eine durch elektronische Ansteuerung aktivierbare Blockiereinrichtung zur Blockierung einer Bewegung des Fahrzeugs, eine Ermittlungseinrichtung, die dazu eingerichtet ist, zu ermitteln, ob sich das Fahrzeug bewegt oder nicht, und eine Steuereinrichtung auf, die dazu eingerichtet ist zu ermitteln, ob die Blockiereinrichtung aktiviert wurde oder nicht, und, wenn die Blockiereinrichtung aktiviert wurde, die Ermittlungseinrichtung dazu zu veranlassen zu ermitteln, ob sich das Fahrzeug bewegt oder nicht, und, wenn die Ermittlungseinrichtung ermittelt, dass sich das Fahrzeug bewegt, einen Elektromotor des Fahrzeugs zum Antrieb des Fahrzeugs anzusteuern, um die Bewegung des Fahrzeugs zu stoppen und den Stoppzustand des Fahrzeugs beizubehalten.

Hierdurch kann in einer Ausführung in einem Fahrzeug lediglich eine Blockiereinrichtung zur Blockierung der Bewegung des Fahrzeugs, beispielsweise eine durch elektronische Ansteuerung aktivierbare Parkbremse oder eine durch elektronische Ansteuerung aktivierbare Parksperre verbaut werden, da im Falle einer Fehlfunktion der einen Blockiereinrichtung, die anhand einer Bewegung des Fahrzeugs erkannt wird, wenn die Blockiereinrichtung aktiviert ist, mittels der Ansteuerung des Elektromotors zum Antrieb des Fahrzeugs, um eine Bewegung des Fahrzeugs zu stoppen und den Stoppzustand des Fahrzeugs beizubehalten, sichergestellt wird, dass das Fahrzeug trotz der Fehlfunkton der Blockiereinrichtung nicht wegrollt. Auf diese Weise können Kosten für eine zweite, redundante Blockiereinrichtung eingespart und der Integrationsaufwand für eine Einrichtung zur Verhinderung eines Wegrollens eines geparkten Fahrzeugs reduziert werden.

In einer Ausführung weist die Einrichtung ferner eine Speichereinrichtung und eine Ausgabeeinrichtung auf, wobei die Steuereinrichtung dazu eingerichtet ist, eine Information darüber, dass die Blockiereinrichtung einen Fehler aufweist, in der Speichereinrichtung zu speichern und mittels der Ausgabeeinrichtung auszugeben, wenn die Blockiereinrichtung aktiviert wurde und die Ermittlungseinrichtung ermittelt, dass sich das Fahrzeug bewegt.

Hierbei kann die Ausgabeeinrichtung beispielsweise als eine Anzeigeeinrichtung ausgebildet sein, auf der die Information darüber, dass die Blockiereinrichtung einen Fehler aufweist, und gegebenenfalls ein Hinweis für den Benutzer, dass die Blockiereinrichtung repariert werden muss, ausgegeben wird.

Hierdurch kann in einer Ausführung sichergestellt werden, dass der Benutzer über eine Fehlfunktion der Blockiereinrichtung informiert wird und entsprechende Maßnahmen zur Reparatur der Blockiereinrichtung ergreifen kann.

In einer Ausführung weist die Steuereinrichtung eine Elektromotorsteuereinrichtung auf und ist dazu eingerichtet, die Elektromotorsteuereinrichtung zu aktivieren, wenn die Blockiereinrichtung aktiviert wurde, wobei die Elektromotorsteuereinrichtung dazu eingerichtet ist, den Elektromotor anzusteuern, um die Bewegung des Fahrzeugs zu stoppen und den Stoppzustand des Fahrzeugs beizubehalten, wenn die Ermittlungseinrichtung ermittelt, dass sich das Fahrzeug bewegt.

Hierdurch kann in einer Ausführung sichergestellt werden, dass die Elektromotorsteuereinrichtung aktiviert wird, um gegebenenfalls die Bewegung des Fahrzeugs zu stoppen und den Stoppzustand des Fahrzeugs beizubehalten, wenn das Fahrzeug geparkt wird, wodurch das Wegrollen des geparkten Fahrzeugs zuverlässig verhindert werden kann.

Nach einer Ausführung ist die Steuereinrichtung dazu eingerichtet, die Elektromotorsteuereinrichtung zu deaktivieren, wenn die Ermittlungseinrichtung ermittelt, dass sich das Fahrzeug nicht bewegt.

Hierdurch kann in einer Ausführung Energie eingespart werden, die zum Betrieb der Elektromotorsteuereinrichtung erforderlich wäre, wenn die Ermittlungseinrichtung ermittelt, dass sich das Fahrzeug nicht bewegt.

Nach einer Ausführung ist die Steuereinrichtung dazu eingerichtet, nach der Deaktivierung der Elektromotorsteuereinrichtung die Ermittlungseinrichtung dazu zu veranlassen, kontinuierlich zu ermitteln, ob sich das Fahrzeug bewegt oder nicht, und, wenn die Ermittlungseinrichtung ermittelt, dass sich das Fahrzeug bewegt, die Elektromotorsteuereinrichtung zu aktivieren, um den Elektromotor anzusteuern, um die Bewegung des Fahrzeugs zu stoppen und den Stoppzustand des Fahrzeugs beizubehalten.

Hierdurch kann in einer Ausführung verhindert werden, dass durch eine Fehlfunkton der Blockiereinrichtung, welche sich erst nach der Deaktivierung der Elektromotorsteuereinrichtung einstellt, das geparkte Fahrzeug wegrollt.

Nach einer Ausführung ist die Ermittlungseinrichtung dazu eingerichtet, eine Drehposition eines Rotors des Elektromotors zu erfassen und/oder eine Drehzahl eines Rads des Fahrzeugs zu erfassen, und zu ermitteln, dass sich das Fahrzeug bewegt, wenn sich die Drehposition des Rotors des Elektromotors ändert oder die Drehzahl des Rads ungleich Null ist.

Hierdurch kann in einer Ausführung auf sichere Weise ermittelt werden, ob sich das Fahrzeug bewegt oder nicht.

Nach einer Ausführung ist die Blockiereinrichtung eine durch elektronische Ansteuerung aktivierbare Parksperre zur Blockierung einer Abtriebswelle des Elektromotors oder eine durch elektronische Ansteuerung aktivierbare Parksperre zur Blockierung eines Getriebes des Fahrzeugs oder eine durch elektronische Ansteuerung aktivierbare Feststellbremse zur Blockierung zumindest eines Rads des Fahrzeugs.

Hierbei kann die jeweilige Blockiereinrichtung automatisch, beispielsweise wenn der Wählhebel eines Automatikgetriebes auf die Parkstellung gestellt wird, und/oder manuell mittels einer entsprechenden Betätigungseinrichtung durch den Benutzer aktiviert werden.

Hierdurch kann in einer Ausführung im Falle einer funktionsfähigen Blockiereinrichtung sichergestellt werden, dass durch die Blockiereinrichtung ein Wegrollen des geparkten Fahrzeugs verhindert wird.

Nach einer Ausführung ist die Steuereinrichtung dazu eingerichtet, anhand einer Stellung eines Aktuators der Blockiereinrichtung zu ermitteln, ob die Blockiereinrichtung aktiviert wurde oder nicht.

Nach einer Ausführung ist die Steuereinrichtung dazu eingerichtet, ein Drehmoment des Elektromotors zu regeln, um die Bewegung des Fahrzeugs zu stoppen und den Stoppzustand des Fahrzeugs beizubehalten.

Hierbei wird das Drehmoment des Elektromotors insbesondere auf einen Wert geregelt, bei dem sich die (Dreh-)Position bzw. der Drehwinkel des Rotors nicht ändert bzw. konstant bleibt.

Hierdurch kann in einer Ausführung durch Einstellung eines entsprechenden Drehmoments des Elektromotors verhindert werden, dass das geparkte Fahrzeug wegrollt.

Nach einer Ausführung der vorliegenden Erfindung weist ein Fahrzeug, insbesondere Elektro- oder Hybridfahrzeug, eine vorstehend beschriebene Einrichtung zur Verhinderung eines Wegrollens eines geparkten Fahrzeugs, insbesondere Elektro- oder Hybridfahrzeugs, auf.

Nach einer Ausführung der vorliegenden Erfindung weist ein Verfahren zur Verhinderung eines Wegrollens eines geparkten Fahrzeugs, insbesondere Elektro- oder Hybridfahrzeugs, ein Ermitteln, mittels einer Steuereinrichtung, ob eine Blockiereinrichtung zur Blockierung einer Bewegung des Fahrzeugs, die durch elektronische Ansteuerung aktivierbar ist, aktiviert wurde oder nicht, ein Veranlassen, mittels der Steuereinrichtung, dass eine Ermittlungseinrichtung ermittelt, ob sich das Fahrzeug bewegt oder nicht, wenn mittels der Steuereinrichtung ermittelt wurde, dass die Blockiereinrichtung aktiviert wurde, und ein Ansteuern, mittels der Steuereinrichtung, eines Elektromotors des Fahrzeugs zum Antrieb des Fahrzeugs auf, um die Bewegung des Fahrzeugs zu stoppen und den Stoppzustand des Fahrzeugs beizubehalten, wenn die Ermittlungseinrichtung ermittelt, dass sich das Fahrzeug bewegt.

Hierdurch kann in einer Ausführung in einem Fahrzeug lediglich eine Blockiereinrichtung zur Blockierung der Bewegung des Fahrzeugs, beispielsweise eine durch elektronische Ansteuerung aktivierbare Parkbremse oder eine durch elektronische Ansteuerung aktivierbare Parksperre verbaut werden, da im Falle einer Fehlfunktion der einen Blockiereinrichtung, die anhand einer Bewegung des Fahrzeugs erkannt wird, wenn die Blockiereinrichtung aktiviert ist, mittels der Ansteuerung des Elektromotors zum Antrieb des Fahrzeugs, um eine Bewegung des Fahrzeugs zu stoppen und den Stoppzustand des Fahrzeugs beizubehalten, sichergestellt wird, dass das Fahrzeug trotz der Fehlfunkton der Blockiereinrichtung nicht wegrollt. Auf diese Weise können Kosten für eine zweite, redundante Blockiereinrichtung eingespart und der Integrationsaufwand für eine Einrichtung zur Verhinderung eines Wegrollens eines geparkten Fahrzeugs reduziert werden.

Nach einer Ausführung weist das Verfahren ferner ein Speichern, mittels der Steuereinrichtung, einer Information darüber, dass die Blockiereinrichtung einen Fehler aufweist, in einer Speichereinrichtung, und ein Veranlassen, mittels der Steuereinrichtung, dass eine Ausgabeeinrichtung die Information darüber, dass die Blockiereinrichtung einen Fehler aufweist, ausgibt, auf, wenn die Blockiereinrichtung aktiviert wurde und mittels der Ermittlungseinrichtung ermittelt wurde, dass sich das Fahrzeug bewegt.

Hierbei kann die Ausgabeeinrichtung beispielsweise als eine Anzeigeeinrichtung ausgebildet sein, auf der die Information darüber, dass die Blockiereinrichtung einen Fehler aufweist, und gegebenenfalls ein Hinweis für den Benutzer, dass die Blockiereinrichtung repariert werden muss, ausgegeben wird.

Hierdurch kann in einer Ausführung sichergestellt werden, dass der Benutzer über eine Fehlfunktion der Blockiereinrichtung informiert wird und entsprechende Maßnahmen zur Reparatur der Blockiereinrichtung ergreifen kann.

Nach einer Ausführung des Verfahrens weist die Steuereinrichtung eine Elektromotorsteuereinrichtung auf, wobei mittels der Steuereinrichtung die Elektromotorsteuereinrichtung aktiviert wird, wenn die Blockiereinrichtung aktiviert wurde, und das Verfahren ferner ein Ansteuern, mittels der Elektromotorsteuereinrichtung, des Elektromotors, aufweist, um die Bewegung des Fahrzeugs zu stoppen und den Stoppzustand des Fahrzeugs beizubehalten, wenn mittels der Ermittlungseinrichtung ermittelt wird, dass sich das Fahrzeug bewegt.

Hierdurch kann in einer Ausführung sichergestellt werden, dass die Elektromotorsteuereinrichtung aktiviert wird, um gegebenenfalls die Bewegung des Fahrzeugs zu stoppen und den Stoppzustand des Fahrzeugs beizubehalten, wenn das Fahrzeug geparkt wird, wodurch das Wegrollen des geparkten Fahrzeugs zuverlässig verhindert werden kann.

Nach einer Ausführung weist das Verfahren ferner ein Deaktivieren, mittels der Steuereinrichtung, der Elektromotorsteuereinrichtung auf, wenn mittels der Ermittlungseinrichtung ermittelt wird, dass sich das Fahrzeug nicht bewegt.

Hierdurch kann in einer Ausführung Energie eingespart werden, die zum Betrieb der Elektromotorsteuereinrichtung erforderlich wäre, wenn die Ermittlungseinrichtung ermittelt, dass sich das Fahrzeug nicht bewegt.

Nach einer Ausführung weist das Verfahren ferner ein Veranlassen, nach der Deaktivierung der Elektromotorsteuereinrichtung, mittels der Steuereinrichtung, dass die Ermittlungseinrichtung kontinuierlich ermittelt, ob sich das Fahrzeug bewegt oder nicht, und, wenn mittels der Ermittlungseinrichtung ermittelt wird, dass sich das Fahrzeug bewegt, ein Aktivieren der Elektromotorsteuereinrichtung, durch die Steuereinrichtung, auf, um den Elektromotor anzusteuern, um die Bewegung des Fahrzeugs zu stoppen und den Stoppzustand des Fahrzeugs beizubehalten.

Hierdurch kann in einer Ausführung verhindert werden, dass durch eine Fehlfunkton der Blockiereinrichtung, welche sich erst nach der Deaktivierung der Elektromotorsteuereinrichtung einstellt, das geparkte Fahrzeug wegrollt.

Nach einer Ausführung des Verfahrens weist das Ermitteln mittels der Ermittlungseinrichtung, ob sich das Fahrzeug bewegt oder nicht, ein Erfassen einer Drehpostition eines Rotors des Elektromotors und/oder ein Erfassen einer Drehzahl eines Rads des Fahrzeugs auf, wobei mittels der Ermittlungseinrichtung ermittelt wird, dass sich das Fahrzeug bewegt, wenn sich die Drehposition des Rotors des Elektromotors ändert oder die Drehzahl des Rads ungleich Null ist.

Hierdurch kann in einer Ausführung auf sichere Weise ermittelt werden, ob sich das Fahrzeug bewegt oder nicht.

Nach einer Ausführung des Verfahrens ist die Blockiereinrichtung eine durch elektronische Ansteuerung aktivierbare Parksperre zur Blockierung einer Abtriebswelle des Elektromotors oder eine durch elektronische Ansteuerung aktivierbare Parksperre zur Blockierung eines Getriebes des Fahrzeugs oder eine durch elektronische Ansteuerung aktivierbare Feststellbremse zur Blockierung zumindest eines Rads des Fahrzeugs.

Hierbei kann die jeweilige Blockiereinrichtung automatisch, beispielsweise wenn der Wählhebel eines Automatikgetriebes auf die Parkstellung gestellt wird, und/oder manuell mittels einer entsprechenden Betätigungseinrichtung durch den Benutzer aktiviert werden.

Hierdurch kann in einer Ausführung im Falle einer funktionsfähigen Blockiereinrichtung sichergestellt werden, dass durch die Blockiereinrichtung ein Wegrollen des geparkten Fahrzeugs verhindert wird.

Nach einer Ausführung des Verfahrens ermittelt die Steuereinrichtung anhand einer Stellung eines Aktuators der Blockiereinrichtung, ob die Blockiereinrichtung aktiviert wurde oder nicht.

Nach einer Ausführung des Verfahrens wird mittels der Steuereinrichtung ein Drehmoment des Elektromotors geregelt, um die Bewegung des Fahrzeugs zu stoppen und den Stoppzustand des Fahrzeugs beizubehalten.

Hierbei wird das Drehmoment des Elektromotors insbesondere auf einen Wert geregelt, bei dem sich die (Dreh-)Position bzw. der Drehwinkel des Rotors nicht ändert bzw. konstant bleibt.

Hierdurch kann in einer Ausführung durch Einstellung eines entsprechenden Drehmoments des Elektromotors verhindert werden, dass das geparkte Fahrzeug wegrollt.

Weitere Vorteile und Merkmale ergeben sich aus den Unteransprüchen und den Ausführungsbeispielen. Hierzu zeigt, teilweise schematisiert:
- Fig. 1: ein Fahrzeug mit einer Einrichtung zur Verhinderung eines Wegrollens eines geparkten Fahrzeugs nach einer Ausführung der vorliegenden Erfindung, und
- Fig. 2: ein Flussdiagramm zur Veranschaulichung eines Verfahrens zur Verhinderung eines Wegrollens eines geparkten Fahrzeugs nach einer Ausführung der vorliegenden Erfindung.

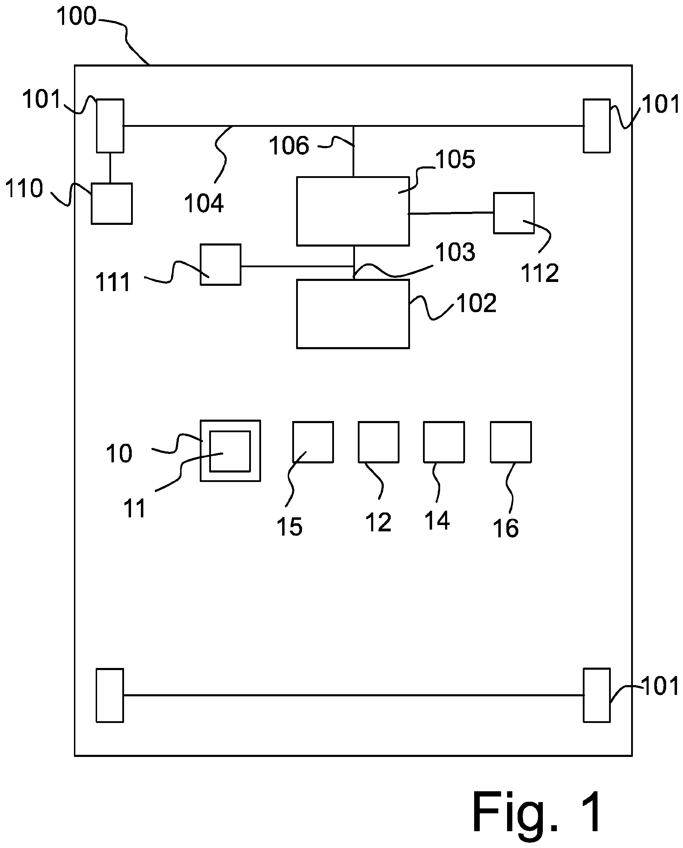

Fig. 1 zeigt ein Fahrzeug 100 mit einer Einrichtung zur Verhinderung eines Wegrollens eines geparkten Fahrzeugs 100 nach einer Ausführung der vorliegenden Erfindung.

Das Fahrzeug 100, das vorzugsweise als Elektro- oder Hybridfahrzeug ausgebildet ist, weist einen Elektromotor 102 zum Antrieb des Fahrzeugs 100 auf. Eine Abtriebswelle 103 des Elektromotors 102, die drehfest mit einem Rotor des Elektromotors 102 verbunden ist, dient als Eingangswelle eines Getriebes 105, vorzugsweise Automatikgetriebes, des Fahrzeugs 100 oder ist mit einer Eingangswelle des Getriebes 105 verbunden. Mittels des Getriebes 105 kann ein Übersetzungsverhältnis, das heißt ein Verhältnis zwischen einer Drehzahl der Abtriebswelle 103 des Elektromotors 102 und einer Drehzahl einer Abtriebswelle 106 des Getriebes 105 eingestellt, vorzugsweise stufenlos eingestellt werden. Die Abtriebswelle 106 des Getriebes 105 ist über eine Achse 104 mit daran montierten Rädern 101 des Fahrzeugs 100 verbunden, um diese mittels des Elektromotors 102 anzutreiben.

Bei einer nicht gezeigten Ausführungsform kann die Abtriebswelle 103 des Elektromotors 102 auch ohne Zwischenschaltung eines Getriebes mit den Rädern 101 verbunden sein, um diese anzutreiben.

Um ein Wegrollen des Fahrzeugs 100 in einem geparkten Zustand des Fahrzeugs 100 zu verhindern, weist die Einrichtung zur Verhinderung eines Wegrollens eines geparkten Fahrzeugs 100 eine, vorzugsweise eine einzige, Blockiereinrichtung 110, 111, 112 auf. Die Blockiereinrichtung 110, 111, 112 kann beispielsweise als eine durch elektronische Ansteuerung aktivierbare Parksperre 111 zur Blockierung der Abtriebswelle 103 des Elektromotors 102 oder als eine durch elektronische Ansteuerung aktivierbare Parksperre 112 zur Blockierung des Getriebes 105, beispielsweise eines Differentialgetriebes davon, des Fahrzeugs 100 oder als eine durch elektronische Ansteuerung aktivierbare Feststellbremse 110 zur Blockierung zumindest eines Rads 101 des Fahrzeugs 100 ausgebildet sein.

Zur Aktivierung der jeweiligen Blockiereinrichtung 110, 111, 112 kann eine beispielsweise als Schalter ausgebildete Betätigungseinrichtung 16 vorgesehen sein, die mit einem Aktuator der entsprechenden Blockiereinrichtung 110, 111, 112 elektrisch verbunden ist. Bei einer Betätigung der Betätigungseinrichtung 16 durch einen Benutzer wird ein elektrisches Signal an die Blockiereinrichtung 110, 111, 112 bzw. den Aktuator davon gesendet, um die Blockiereinrichtung 110, 111, 112 zu aktivieren. Zusätzlich oder alternativ kann die jeweilige Blockiereinrichtung 110, 111, 112 auch automatisch, beispielsweise wenn der Wählhebel eines als Automatikgetriebe ausgebildeten Getriebes 105 auf die Parkstellung gestellt wird, gesteuert durch eine Steuereinrichtung 10 aktiviert werden.

Die Einrichtung zur Verhinderung eines Wegrollens eines geparkten Fahrzeugs 100 weist ferner eine Ermittlungseinrichtung 15 auf, die dazu eingerichtet ist, zu ermitteln, ob sich das Fahrzeug 100 bewegt oder nicht. Hierbei kann die Ermittlungseinrichtung 15 beispielsweise dazu eingerichtet sein, eine Drehposition eines Rotors des Elektromotors 102 zu erfassen und/oder eine Drehzahl eines Rads 101 des Fahrzeugs 100 zu erfassen, und zu ermitteln, dass sich das Fahrzeug 100 bewegt, wenn sich die Drehposition des Rotors des Elektromotors 102 ändert oder die Drehzahl des Rads 101 ungleich Null ist.

Die Steuereinrichtung 10 ist ferner dazu eingerichtet zu ermitteln, ob die Blockiereinrichtung 110, 111, 112 aktiviert wurde oder nicht. Hierzu kann die Steuereinrichtung 10 beispielsweise dazu eingerichtet sein, anhand einer Stellung (Betätigt-Stellung oder Nicht-Betätigt-Stellung) des Aktuators der Blockiereinrichtung 110, 111, 112 zu ermitteln, ob die Blockiereinrichtung 110, 111, 112 aktiviert wurde oder nicht.

Die Steuereinrichtung 10 ist dazu eingerichtet, die Ermittlungseinrichtung 15 dazu zu veranlassen zu ermitteln, ob sich das Fahrzeug 100 bewegt oder nicht, wenn die Steuereinrichtung 10 zuvor ermittelt hat, dass die Blockiereinrichtung 110, 111, 112 aktiviert wurde.

Wenn die Ermittlungseinrichtung 15 ermittelt, dass sich das Fahrzeug 100 bewegt, ist die Steuereinrichtung 10 dazu eingerichtet, den Elektromotor 102 des Fahrzeugs 100 zum Antrieb des Fahrzeugs 100 anzusteuern, um die Bewegung des Fahrzeugs 100 zu stoppen und den Stoppzustand des Fahrzeugs 100 beizubehalten. Hierzu ist die Steuereinrichtung 10 vorzugsweise dazu eingerichtet, ein Drehmoment des Elektromotors 102 zu regeln, um die Bewegung des Fahrzeugs 100 zu stoppen und den Stoppzustand des Fahrzeugs 100 beizubehalten. Hierbei wird das Drehmoment des Elektromotors 102 vorzugsweise auf einen Wert geregelt, bei dem sich die (Dreh-)Position bzw. der Drehwinkel des Rotors nicht ändert bzw. konstant bleibt.

Die Einrichtung zur Verhinderung eines Wegrollens eines geparkten Fahrzeugs 100 weist ferner eine Speichereinrichtung 12 und eine Ausgabeeinrichtung 14 auf, wobei die Steuereinrichtung 10 dazu eingerichtet ist, eine Information darüber, dass die Blockiereinrichtung 110, 111, 112 einen Fehler aufweist, in der Speichereinrichtung 12 zu speichern und mittels der Ausgabeeinrichtung 14 auszugeben, wenn die Blockiereinrichtung 110, 111, 112 aktiviert wurde und die Ermittlungseinrichtung 15 ermittelt, dass sich das Fahrzeug 100 bewegt. Hierbei kann die Ausgabeeinrichtung 14 beispielsweise als eine Anzeigeeinrichtung ausgebildet sein, auf der die Information darüber, dass die Blockiereinrichtung 110, 111, 112 einen Fehler aufweist, und gegebenenfalls ein Hinweis für den Benutzer, dass die Blockiereinrichtung 110, 111, 112 repariert werden muss, ausgegeben wird.

Vorzugsweise weist die Steuereinrichtung 10 eine Elektromotorsteuereinrichtung 11 auf und ist dazu eingerichtet, die Elektromotorsteuereinrichtung 11 zu aktivieren, wenn die Blockiereinrichtung 110, 111, 112 aktiviert wurde. In diesem Fall ist die Elektromotorsteuereinrichtung 11 dazu eingerichtet, den Elektromotor 102 anzusteuern, insbesondere das Drehmoment des Elektromotors 102 zu regeln, um die Bewegung des Fahrzeugs 100 zu stoppen und den Stoppzustand des Fahrzeugs 100 beizubehalten, wenn die Ermittlungseinrichtung 15 ermittelt, dass sich das Fahrzeug 100 bewegt. Weiterhin ist hierbei die Steuereinrichtung 10 dazu eingerichtet, die Elektromotorsteuereinrichtung 11 zu deaktivieren, wenn die Ermittlungseinrichtung 15 ermittelt, dass sich das Fahrzeug 100 nicht bewegt, und nach der Deaktivierung der Elektromotorsteuereinrichtung 11 die Ermittlungseinrichtung 15 dazu zu veranlassen, kontinuierlich zu ermitteln, ob sich das Fahrzeug 100 bewegt oder nicht, und, wenn die Ermittlungseinrichtung 15 ermittelt, dass sich das Fahrzeug 100 bewegt, die Elektromotorsteuereinrichtung 11 zu aktivieren, um den Elektromotor 102 anzusteuern, um die Bewegung des Fahrzeugs 100 zu stoppen und den Stoppzustand des Fahrzeugs 100 beizubehalten.

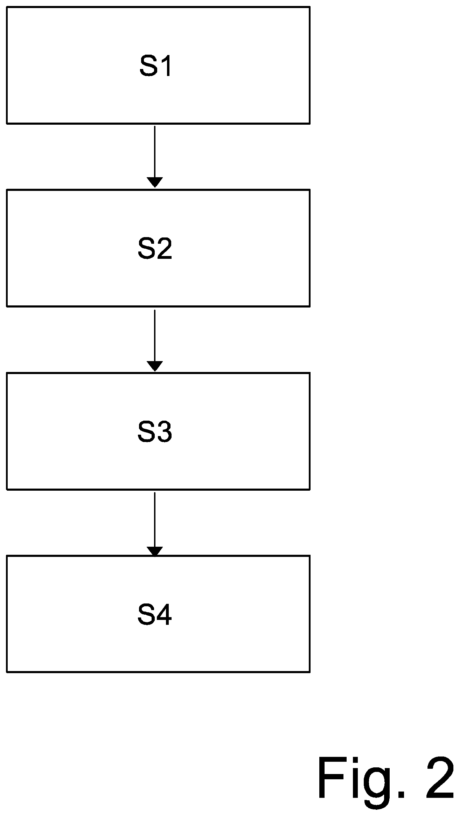

Fig. 2 zeigt ein Flussdiagramm zur Veranschaulichung eines Verfahrens zur Verhinderung eines Wegrollens eines geparkten Fahrzeugs nach einer Ausführung der vorliegenden Erfindung.

In Schritt S1 wird mittels der Steuereinrichtung 10 ermittelt, ob eine Blockiereinrichtung 110, 111, 112 zur Blockierung einer Bewegung des Fahrzeugs 100, die durch elektronische Ansteuerung aktivierbar ist, aktiviert wurde oder nicht. Hierbei kann die Blockiereinrichtung 110, 111, 112 die durch elektronische Ansteuerung aktivierbare Parksperre 111 zur Blockierung der Abtriebswelle 103 des Elektromotors 102 oder die durch elektronische Ansteuerung aktivierbare Parksperre 112 zur Blockierung des Getriebes 105 des Fahrzeugs 100 oder die durch elektronische Ansteuerung aktivierbare Feststellbremse 110 zur Blockierung zumindest eines Rads 101 des Fahrzeugs 100 sein. Ferner kann hierbei die Steuereinrichtung 10 anhand einer Stellung eines Aktuators der Blockiereinrichtung 110, 111, 112 ermitteln, ob die Blockiereinrichtung 110, 111, 112 aktiviert wurde oder nicht.

In Schritt S2 wird mittels der Steuereinrichtung 10 veranlasst, dass eine Ermittlungseinrichtung 15 ermittelt, ob sich das Fahrzeug 100 bewegt oder nicht, wenn mittels der Steuereinrichtung 10 ermittelt wurde, dass die Blockiereinrichtung 110, 111, 112 aktiviert wurde. Hierbei kann das Ermitteln mittels der Ermittlungseinrichtung 15, ob sich das Fahrzeug 100 bewegt oder nicht, ein Erfassen einer Drehposition eines Rotors des Elektromotors 102 und/oder ein Erfassen einer Drehzahl eines Rads 101 des Fahrzeugs 100 aufweisen, wobei mittels der Ermittlungseinrichtung 15 ermittelt wird, dass sich das Fahrzeug 100 bewegt, wenn sich die Drehposition des Rotors des Elektromotors 102 ändert oder die Drehzahl des Rads 101 ungleich Null ist.

In Schritt S3 wird mittels der Steuereinrichtung 10 der Elektromotors 102 des Fahrzeugs 100 zum Antrieb des Fahrzeugs 100 angesteuert, um die Bewegung des Fahrzeugs 100 zu stoppen und den Stoppzustand des Fahrzeugs 100 beizubehalten, wenn die Ermittlungseinrichtung 15 ermittelt, dass sich das Fahrzeug 100 bewegt. Hierbei kann mittels der Steuereinrichtung 10 ein Drehmoment des Elektromotors 102 geregelt werden, um die Bewegung des Fahrzeugs 100 zu stoppen und den Stoppzustand des Fahrzeugs 100 beizubehalten.

In einem optionalen Schritt S4 wird mittels der Steuereinrichtung 10 eine Information darüber, dass die Blockiereinrichtung 110, 111, 112 einen Fehler aufweist, in einer Speichereinrichtung 12 gespeichert, und mittels der Steuereinrichtung 10 veranlasst, dass eine beispielsweis als Anzeigeeinrichtung ausgebildete Ausgabeeinrichtung 14 die Information darüber, dass die Blockiereinrichtung 110, 111, 112 einen Fehler aufweist, ausgibt, wenn die Blockiereinrichtung 110, 111, 112 aktiviert wurde und mittels der Ermittlungseinrichtung 15 ermittelt wurde, dass sich das Fahrzeug 100 bewegt.

Gemäß einer bevorzugten Ausführung weist die Steuereinrichtung 10 eine Elektromotorsteuereinrichtung 11 auf, welche in Schritt S2 mittels der Steuereinrichtung 10 aktiviert wird, wenn die Blockiereinrichtung 110, 111, 112 aktiviert wurde. In diesem Fall wird in Schritt S3 mittels der Elektromotorsteuereinrichtung 11 der Elektromotor 102 angesteuert, um die Bewegung des Fahrzeugs 100 zu stoppen und den Stoppzustand des Fahrzeugs 100 beizubehalten, wenn mittels der Ermittlungseinrichtung 15 ermittelt wird, dass sich das Fahrzeug 100 bewegt. Hierbei erfolgt ferner ein Deaktivieren, mittels der Steuereinrichtung 10, der Elektromotorsteuereinrichtung 11, wenn mittels der Ermittlungseinrichtung 15 ermittelt wird, dass sich das Fahrzeug 100 nicht bewegt. Nach der Deaktivierung der Elektromotorsteuereinrichtung 11 wird dann mittels der Steuereinrichtung 10 veranlasst, dass die Ermittlungseinrichtung 15 kontinuierlich ermittelt, ob sich das Fahrzeug 100 bewegt oder nicht, und, wenn mittels der Ermittlungseinrichtung 15 ermittelt wird, dass sich das Fahrzeug 100 bewegt, wird durch die Steuereinrichtung 10 die Elektromotorsteuereinrichtung 11 aktiviert, um den Elektromotor 102 anzusteuern, um die Bewegung des Fahrzeugs 100 zu stoppen und den Stoppzustand des Fahrzeugs 100 beizubehalten.

### Bezugszeichenliste

- 10: Steuereinrichtung
- 11: Elektromotorsteuereinrichtung
- 12: Speichereinrichtung
- 14: Ausgabeeinrichtung
- 15: Ermittlungseinrichtung
- 16: Betätigungseinrichtung
- 100: Fahrzeug
- 101: Rad
- 102: Elektromotor
- 103: Abtriebswelle Elektromotor
- 105: Getriebe
- 106: Abtriebswelle Getriebe
- 110: Feststellbremse
- 111: Parksperre zur Blockierung der Abtriebswelle des Elektromotors
- 112: Parksperre zur Blockierung des Getriebes des Fahrzeugs

## Patentansprüche

1. Einrichtung zur Verhinderung eines Wegrollens eines geparkten Fahrzeugs (100), insbesondere Elektro- oder Hybridfahrzeugs, aufweisend
eine durch elektronische Ansteuerung aktivierbare Blockiereinrichtung (110, 111, 112) zur Blockierung einer Bewegung des Fahrzeugs (100),
eine Ermittlungseinrichtung (15), die dazu eingerichtet ist, zu ermitteln, ob sich das Fahrzeug (100) bewegt oder nicht, und
eine Steuereinrichtung (10), die dazu eingerichtet ist zu ermitteln, ob die Blockiereinrichtung (110, 111, 112) aktiviert wurde oder nicht, und, wenn die Blockiereinrichtung (110, 111, 112) aktiviert wurde, die Ermittlungseinrichtung (15) dazu zu veranlassen zu ermitteln, ob sich das Fahrzeug (100) bewegt oder nicht, und, wenn die Ermittlungseinrichtung (15) ermittelt, dass sich das Fahrzeug (100) bewegt, einen Elektromotor (102) des Fahrzeugs (100) zum Antrieb des Fahrzeugs (100) anzusteuern, um die Bewegung des Fahrzeugs (100) zu stoppen und den Stoppzustand des Fahrzeugs (100) beizubehalten.

2. Einrichtung gemäß Anspruch 1, ferner aufweisend eine Speichereinrichtung (12) und eine Ausgabeeinrichtung (14), wobei die Steuereinrichtung (10) dazu eingerichtet ist, eine Information darüber, dass die Blockiereinrichtung (110, 111, 112) einen Fehler aufweist, in der Speichereinrichtung (12) zu speichern und mittels der Ausgabeeinrichtung (14) auszugeben, wenn die Blockiereinrichtung (110, 111, 112) aktiviert wurde und die Ermittlungseinrichtung (15) ermittelt, dass sich das Fahrzeug (100) bewegt.

3. Einrichtung gemäß Anspruch 1 oder 2, bei der die Steuereinrichtung (10) eine Elektromotorsteuereinrichtung (11) aufweist und dazu eingerichtet ist, die Elektromotorsteuereinrichtung (11) zu aktivieren, wenn die Blockiereinrichtung (110, 111, 112) aktiviert wurde, und die Elektromotorsteuereinrichtung (11) dazu eingerichtet ist, den Elektromotor (102) anzusteuern, um die Bewegung des Fahrzeugs (100) zu stoppen und den Stoppzustand des Fahrzeugs (100) beizubehalten, wenn die Ermittlungseinrichtung (15) ermittelt, dass sich das Fahrzeug (100) bewegt.

4. Einrichtung gemäß Anspruch 3, bei der die Steuereinrichtung (10) dazu eingerichtet ist, die Elektromotorsteuereinrichtung (11) zu deaktivieren, wenn die Ermittlungseinrichtung (15) ermittelt, dass sich das Fahrzeug (100) nicht bewegt.

5. Einrichtung gemäß Anspruch 4, bei der die Steuereinrichtung (10) dazu eingerichtet ist, nach der Deaktivierung der Elektromotorsteuereinrichtung (11) die Ermittlungseinrichtung (15) dazu zu veranlassen, kontinuierlich zu ermitteln, ob sich das Fahrzeug (100) bewegt oder nicht, und, wenn die Ermittlungseinrichtung (15) ermittelt, dass sich das Fahrzeug (100) bewegt, die Elektromotorsteuereinrichtung (11) zu aktivieren, um den Elektromotor (102) anzusteuern, um die Bewegung des Fahrzeugs (100) zu stoppen und den Stoppzustand des Fahrzeugs (100) beizubehalten.

6. Einrichtung gemäß einem der vorhergehenden Ansprüche, bei der die Ermittlungseinrichtung (15) dazu eingerichtet ist, eine Drehposition eines Rotors des Elektromotors (102) zu erfassen und/oder eine Drehzahl eines Rads (101) des Fahrzeugs (100) zu erfassen, und zu ermitteln, dass sich das Fahrzeug (100) bewegt, wenn sich die Drehposition des Rotors des Elektromotors (102) ändert oder die Drehzahl des Rads (101) ungleich Null ist.

7. Einrichtung gemäß einem der vorhergehenden Ansprüche, bei der die Blockiereinrichtung (110, 111, 112) eine durch elektronische Ansteuerung aktivierbare Parksperre (111) zur Blockierung einer Abtriebswelle (103) des Elektromotors (102) oder eine durch elektronische Ansteuerung aktivierbare Parksperre (112) zur Blockierung eines Getriebes (105) des Fahrzeugs (100) oder eine durch elektronische Ansteuerung aktivierbare Feststellbremse (110) zur Blockierung zumindest eines Rads (101) des Fahrzeugs (100) ist.

8. Einrichtung gemäß einem der vorhergehenden Ansprüche, bei der die Steuereinrichtung (10) dazu eingerichtet ist, anhand einer Stellung eines Aktuators der Blockiereinrichtung (110, 111, 112) zu ermitteln, ob die Blockiereinrichtung (110, 111, 112) aktiviert wurde oder nicht.

9. Einrichtung gemäß einem der vorhergehenden Ansprüche, bei der die Steuereinrichtung (10) dazu eingerichtet ist, ein Drehmoment des Elektromotors (102) zu regeln, um die Bewegung des Fahrzeugs (100) zu stoppen und den Stoppzustand des Fahrzeugs (100) beizubehalten.

10. Fahrzeug (100), insbesondere Elektro- oder Hybridfahrzeug, aufweisend eine Einrichtung gemäß einem der vorhergehenden Ansprüche.

11. Verfahren zur Verhinderung eines Wegrollens eines geparkten Fahrzeugs (100), insbesondere Elektro- oder Hybridfahrzeugs, aufweisend
ein Ermitteln, mittels einer Steuereinrichtung (10), ob eine Blockiereinrichtung (110, 111, 112) zur Blockierung einer Bewegung des Fahrzeugs (100), die durch elektronische Ansteuerung aktivierbar ist, aktiviert wurde oder nicht,
ein Veranlassen, mittels der Steuereinrichtung (10), dass eine Ermittlungseinrichtung (15) ermittelt, ob sich das Fahrzeug (100) bewegt oder nicht, wenn mittels der Steuereinrichtung (10) ermittelt wurde, dass die Blockiereinrichtung (110, 111, 112) aktiviert wurde, und
ein Ansteuern, mittels der Steuereinrichtung (10), eines Elektromotors (102) des Fahrzeugs (100) zum Antrieb des Fahrzeugs (100), um die Bewegung des Fahrzeugs (100) zu stoppen und den Stoppzustand des Fahrzeugs (100) beizubehalten, wenn die Ermittlungseinrichtung (15) ermittelt, dass sich das Fahrzeug (100) bewegt.

12. Verfahren gemäß Anspruch 11, ferner aufweisend ein Speichern, mittels der Steuereinrichtung (10), einer Information darüber, dass die Blockiereinrichtung (110, 111, 112) einen Fehler aufweist, in einer Speichereinrichtung (12), und Veranlassen, mittels der Steuereinrichtung (10), dass eine Ausgabeeinrichtung (14) die Information darüber, dass die Blockiereinrichtung (110, 111, 112) einen Fehler aufweist, ausgibt, wenn die Blockiereinrichtung (110, 111, 112) aktiviert wurde und mittels der Ermittlungseinrichtung (15) ermittelt wurde, dass sich das Fahrzeug (100) bewegt.

13. Verfahren gemäß Anspruch 11 oder 12, bei dem die Steuereinrichtung (10) eine Elektromotorsteuereinrichtung (11) aufweist und mittels der Steuereinrichtung (10) die Elektromotorsteuereinrichtung (11) aktiviert wird, wenn die Blockiereinrichtung (110, 111, 112) aktiviert wurde, und ferner aufweisend ein Ansteuern, mittels der Elektromotorsteuereinrichtung (11), des Elektromotors (102), um die Bewegung des Fahrzeugs (100) zu stoppen und den Stoppzustand des Fahrzeugs (100) beizubehalten, wenn mittels der Ermittlungseinrichtung (15) ermittelt wird, dass sich das Fahrzeug (100) bewegt.

14. Verfahren gemäß Anspruch 13, ferner aufweisend ein Deaktivieren, mittels der Steuereinrichtung (10), der Elektromotorsteuereinrichtung (11), wenn mittels der Ermittlungseinrichtung (15) ermittelt wird, dass sich das Fahrzeug (100) nicht bewegt.

15. Verfahren gemäß Anspruch 14, ferner aufweisend ein Veranlassen, nach der Deaktivierung der Elektromotorsteuereinrichtung (11), mittels der Steuereinrichtung (10), dass die Ermittlungseinrichtung (15) kontinuierlich ermittelt, ob sich das Fahrzeug (100) bewegt oder nicht, und, wenn mittels der Ermittlungseinrichtung (15) ermittelt wird, dass sich das Fahrzeug (100) bewegt, ein Aktivieren der Elektromotorsteuereinrichtung (11), durch die Steuereinrichtung (10), um den Elektromotor (102) anzusteuern, um die Bewegung des Fahrzeugs (100) zu stoppen und den Stoppzustand des Fahrzeugs (100) beizubehalten.

16. Verfahren gemäß einem der Ansprüche 11 bis 15, bei dem das Ermitteln mittels der Ermittlungseinrichtung (15), ob sich das Fahrzeug (100) bewegt oder nicht, ein Erfassen einer Drehposition eines Rotors des Elektromotors (102) und/oder ein Erfassen einer Drehzahl eines Rads (101) des Fahrzeugs (100) aufweist, und mittels der Ermittlungseinrichtung (15) ermittelt wird, dass sich das Fahrzeug (100) bewegt, wenn sich die Drehposition des Rotors des Elektromotors (102) ändert oder die Drehzahl des Rads (101) ungleich Null ist.

17. Verfahren gemäß einem der Ansprüche 11 bis 16, bei der die Blockiereinrichtung (110, 111, 112) eine durch elektronische Ansteuerung aktivierbare Parksperre (111) zur Blockierung einer Abtriebswelle (103) des Elektromotors (102) oder eine durch elektronische Ansteuerung aktivierbare Parksperre (112) zur Blockierung eines Getriebes (105) des Fahrzeugs (100) oder eine durch elektronische Ansteuerung aktivierbare Feststellbremse (110) zur Blockierung zumindest eines Rads (101) des Fahrzeugs (100) ist.

18. Verfahren gemäß einem der Ansprüche 11 bis 17, bei der die Steuereinrichtung (10) anhand einer Stellung eines Aktuators der Blockiereinrichtung (110, 111, 112) ermittelt, ob die Blockiereinrichtung (110, 111, 112) aktiviert wurde oder nicht.

19. Verfahren gemäß einem der Ansprüche 11 bis 18, bei der mittels der Steuereinrichtung (10) ein Drehmoment des Elektromotors (102) geregelt wird, um die Bewegung des Fahrzeugs (100) zu stoppen und den Stoppzustand des Fahrzeugs (100) beizubehalten.

## Claims

1. Device for preventing a parked vehicle (100), in particular an electric or hybrid vehicle, from rolling away, having
a blocking device (110, 111, 112), which can be activated by electronic actuation, for immobilizing a movement of the vehicle (100),
a determination device (15) which is configured to determine whether the vehicle (100) is moving or not, and a control device (10) which is configured to determine whether the blocking device (110, 111, 112) has been activated or not and, if the blocking device (110, 111, 112) has been activated, to prompt the determination device (15) to determine whether the vehicle (100) is moving or not, and, if the determination device (15) determines that the vehicle (100) is moving, to actuate an electric motor (102) of the vehicle (100) for driving the vehicle (100) in order to stop the movement of the vehicle (100) and maintain the stopped state of the vehicle (100).

2. Device according to Claim 1, moreover having a memory device (12) and an output device (14), wherein the control device (10) is configured to save in the memory device (12) information that the blocking device (110, 111, 112) has a fault and to output it, by means of the output device (14), when the blocking device (110, 111, 112) has been activated and the determination device (15) determines that the vehicle (100) is moving.

3. Device according to Claim 1 or 2, in which the control device (10) has an electric motor control device (11) and is configured to activate the electric motor control device (11) when the blocking device (110, 111, 112) has been activated, and the electric motor control device (11) is configured to actuate the electric motor (102) in order to stop the movement of the vehicle (100) and maintain the stopped state of the vehicle (100) if the determination device (15) determines that the vehicle (100) is moving.

4. Device according to Claim 3, in which the control device (10) is configured to deactivate the electric motor control device (11) if the determination device (15) determines that the vehicle (100) is not moving.

5. Device according to Claim 4, in which the control device (10) is configured to prompt the determination device (15), after the deactivation of the electric motor control device (11), to continuously determine whether the vehicle (100) is moving or not and, if the determination device (15) determines that the vehicle (100) is moving, to activate the electric motor control device (11) in order to actuate the electric motor (102) in order to stop the movement of the vehicle (100) and maintain the stopped state of the vehicle (100).

6. Device according to one of the preceding claims, in which the determination device (15) is configured to detect a rotated position of a rotor of the electric motor (102) and/or to detect a speed of rotation of a wheel (101) of the vehicle (100) and to determine that the vehicle (100) is moving if the rotated position of the rotor of the electric motor (102) changes or the speed of rotation of the wheel (101) does not equal zero.

7. Device according to one of the preceding claims, in which the blocking device (110, 111, 112) is a parking lock (111), which can be activated by electronic actuation, for immobilizing an output shaft (103) of the electric motor (102), or a parking lock (112), which can be activated by electronic actuation, for immobilizing a transmission (105) of the vehicle (100), or a parking brake (110), which can be activated by electronic actuation, for immobilizing at least one wheel (101) of the vehicle (100).

8. Device according to one of the preceding claims, in which the control device (10) is configured to determine, on the basis of a position of an actuator of the blocking device (110, 111, 112), whether the blocking device (110, 111, 112) has been activated or not.

9. Device according to one of the preceding claims, in which the control device (10) is configured to regulate torque of the electric motor (102) in order to stop the movement of the vehicle (100) and maintain the stopped state of the vehicle (100).

10. Vehicle (100), in particular electric or hybrid vehicle, having a device according to one of the preceding claims.

11. Method for preventing a parked vehicle (100), in particular an electric or hybrid vehicle, from rolling away, comprising
determining, by means of a control device (10), whether a blocking device (110, 111, 112) for immobilizing a movement of the vehicle (100), which can be activated by electronic actuation, has been activated or not,
prompting, by means of the control device (10), a determination device (15) to determine whether the vehicle (100) is moving or not when it has been determined by means of the control device (10) that the blocking device (110, 111, 112) has been activated, and
actuating, by means of the control device (10), an electric motor (102) of the vehicle (100) for driving the vehicle (100) in order to stop the movement of the vehicle (100) and maintain the stopped state of the vehicle (100) if the determination device (15) determines that the vehicle (100) is moving.

12. Method according to Claim 11, moreover comprising saving in a memory device (12), by means of the control device (10), information that the blocking device (110, 111, 112) has a fault, and prompting, by means of the control device (10), an output device (14) to output the information that the blocking device (110, 111, 112) has a fault when the blocking device (110, 111, 112) has been activated and it has been determined by means of the determination device (15) that the vehicle (100) is moving.

13. Method according to Claim 11 or 12, in which the control device (10) has an electric motor control device (11) and the electric motor control device (11) is activated, by means of the control device (10), when the blocking device (110, 111, 112) has been activated, and moreover comprising actuating, by means of the electric motor control device (11), the electric motor (102) in order to stop the movement of the vehicle (100) and maintain the stopped state of the vehicle (100) if it is determined by means of the determination device (15) that the vehicle (100) is moving.

14. Method according to Claim 13, moreover comprising deactivation, by means of the control device (10), of the electric motor control device (11) if it is determined by means of the determination device (15) that the vehicle (100) is not moving.

15. Method according to Claim 14, moreover comprising prompting, by means of the control device (10), the determination device (15), after the deactivation of the electric motor control device (11), to continuously determine whether the vehicle (100) is moving or not and, if it is determined by means of the determination device (15) that the vehicle (100) is moving, activating the electric motor control device (11), by the control device (10), in order to actuate the electric motor (102) in order to stop the movement of the vehicle (100) and maintain the stopped state of the vehicle (100).

16. Method according to one of Claims 11 to 15, in which the determining by means of the determination device (15) whether the vehicle (100) is moving or not comprises detecting a rotated position of a rotor of the electric motor (102) and/or detecting a speed of rotation of a wheel (101) of the vehicle (100), and it is determined by means of the determination device (15) that the vehicle (100) is moving if the rotated position of the rotor of the electric motor (102) changes or the speed of rotation of the wheel (101) does not equal zero.

17. Method according to one of Claims 11 to 16, in which the blocking device (110, 111, 112) is a parking lock (111), which can be activated by electronic actuation, for immobilizing an output shaft (103) of the electric motor (102), or a parking lock (112), which can be activated by electronic actuation, for immobilizing a transmission (105) of the vehicle (100), or a parking brake (110), which can be activated by electronic actuation, for immobilizing at least one wheel (101) of the vehicle (100).

18. Method according to one of Claims 11 to 17, in which the control device (10) determines, on the basis of a position of an actuator of the blocking device (110, 111, 112), whether the blocking device (110, 111, 112) has been activated or not.

19. Method according to one of Claims 11 to 18, in which torque of the electric motor (102) is regulated by means of the control device (10) in order to stop the movement of the vehicle (100) and maintain the stopped state of the vehicle (100).

## Revendications

1. Dispositif destiné à empêcher un véhicule stationné (100), en particulier un véhicule électrique ou hybride, de s'éloigner, comportant
un dispositif de blocage (110, 111, 112) pouvant être activé au moyen d'une commande électronique pour bloquer un déplacement du véhicule (100),
un dispositif de détermination (15) qui est configuré pour déterminer si le véhicule (100) se déplace ou non, et
un dispositif de commande (10) qui est configuré pour déterminer si le dispositif de blocage (110, 111, 112) a été activé ou non et, si le dispositif de blocage (110, 111, 112) a été activé, pour inviter le dispositif de détermination (15) à déterminer si le véhicule (100) se déplace ou non et, lorsque le dispositif de détermination (15) détermine que le véhicule (100) se déplace, pour commander un moteur électrique (102) du véhicule (100) dans le but d'entraîner le véhicule (100) afin d'arrêter le déplacement du véhicule (100) et de maintenir l'état arrêté du véhicule (100).

2. Dispositif selon la revendication 1, comprenant en outre un dispositif de mémoire (12) et un dispositif de sortie (14), le dispositif de commande (10) étant configuré pour stocker dans le dispositif de mémoire (12) des informations concernant le fait que le dispositif de blocage (110, 111, 112) présente une erreur et pour les délivrer au moyen du dispositif de sortie (14) lorsque le dispositif de blocage (110, 111, 112) a été activé et que le dispositif de détermination (15) détermine que le véhicule (100) se déplace.

3. Dispositif selon la revendication 1 ou 2, dans lequel le dispositif de commande (10) comporte un dispositif de commande de moteur électrique (11) et est configuré pour activer le dispositif de commande de moteur électrique (11) lorsque le dispositif de blocage (110, 111, 112) a été activé, et le dispositif de commande de moteur électrique (11) est configuré pour commander le moteur électrique (102) afin d'arrêter le déplacement du véhicule (100) et de maintenir l'état arrêté du véhicule (100) lorsque le dispositif de détermination (15) détermine que le véhicule (100) se déplace.

4. Dispositif selon la revendication 3, dans lequel le dispositif de commande (10) est configuré pour désactiver le dispositif de commande de moteur électrique (11) lorsque le dispositif de détermination (15) détermine que le véhicule (100) ne se déplace pas.

5. Dispositif selon la revendication 4, dans lequel le dispositif de commande (10) est configuré, après la désactivation du dispositif de commande de moteur électrique (11), pour amener le dispositif de détermination (15) à déterminer en continu si le véhicule (100) se déplace ou non et, si le dispositif de détermination (15) détermine que le véhicule (100) se déplace, pour activer le dispositif de commande de moteur électrique (11) pour commander le moteur électrique (102) afin d'arrêter le déplacement du véhicule (100) et de maintenir l'état arrêté du véhicule (100).

6. Dispositif selon l'une quelconque des revendications précédentes, dans lequel le dispositif de détermination (15) est configuré pour détecter une position de rotation d'un rotor du moteur électrique (102) et/ou pour détecter une vitesse de rotation d'une roue (101) du véhicule (100), et pour déterminer que le véhicule (100) se déplace lorsque la position de rotation du rotor du moteur électrique (102) varie ou lorsque la vitesse de rotation de la roue (101) est différente de zéro.

7. Dispositif selon l'une quelconque des revendications précédentes, dans lequel le dispositif de blocage (110, 111, 112) est un verrou de stationnement (111) pouvant être activé par une commande électronique pour bloquer un arbre de sortie (103) du moteur électrique (102) ou un verrou de stationnement (112) pouvant être activé par une commande électronique pour bloquer une transmission (105) du véhicule (100) ou un frein de stationnement (110) pouvant être activé par une commande électronique pour bloquer au moins une roue (101) du véhicule (100).

8. Dispositif selon l'une quelconque des revendications précédentes, dans lequel le dispositif de commande (10) est configuré pour déterminer si le dispositif de blocage (110, 111, 112) a été activé ou non sur la base d'une position d'un actionneur du dispositif de blocage (110, 111, 112).

9. Dispositif selon l'une quelconque des revendications précédentes, dans lequel le dispositif de commande (10) est configuré pour réguler un couple du moteur électrique (102) afin d'arrêter le déplacement du véhicule (100) et de maintenir l'état arrêté du véhicule (100).

10. Véhicule (100), en particulier véhicule électrique ou hybride, comportant un dispositif selon l'une quelconque des revendications précédentes.

11. Procédé destiné à empêcher un véhicule stationné (100), en particulier un véhicule électrique ou hybride, de s'éloigner, comprenant
la détermination, au moyen d'un dispositif de commande (10), du fait de savoir si un dispositif de blocage (110, 111, 112) destiné à bloquer un déplacement du véhicule (100) pouvant être activé au moyen d'une commande électronique a été activé ou non,
le fait d'amener, au moyen du dispositif de commande (10), un dispositif de détermination (15) à déterminer si le véhicule (100) se déplace ou non lorsqu'il a été déterminé, au moyen du dispositif de commande (10), que le dispositif de blocage (110, 111, 112) a été activé, et
la commande, au moyen du dispositif de commande (10), d'un moteur électrique (102) du véhicule (100) dans le but d'entraîner le véhicule (100) afin d'arrêter le déplacement du véhicule (100) et de maintenir l'état arrêté du véhicule (100) lorsque le dispositif de détermination (15) détermine que le véhicule (100) se déplace.

12. Procédé selon la revendication 11, comprenant en outre le stockage dans un dispositif de mémoire (12), au moyen du dispositif de commande (10), d'informations concernant le fait que le dispositif de blocage (110, 111, 112) présente une erreur, et le fait d'amener, au moyen du dispositif de commande (10), un dispositif de sortie (14) à délivrer les informations concernant le fait que le dispositif de blocage (110, 111, 112) présente une erreur lorsque le dispositif de blocage (110, 111, 112) a été activé et qu'il a été déterminé au moyen du dispositif de détermination (15) que le véhicule (100) se déplace.

13. Procédé selon la revendication 11 ou 12, dans lequel le dispositif de commande (10) comporte un dispositif de commande de moteur électrique (11) et le dispositif de commande de moteur électrique (11) est activé au moyen du dispositif de commande (10) lorsque le dispositif de blocage (110, 111, 112) a été activé, et comprenant en outre une commande, au moyen du dispositif de commande de moteur électrique (11), du moteur électrique (102) afin d'arrêter le déplacement du véhicule (100) et de maintenir l'état arrêté du véhicule (100) lorsque le dispositif de détermination (15) détermine que le véhicule (100) se déplace.

14. Procédé selon la revendication 13, comprenant en outre la désactivation, au moyen du dispositif de commande (10), du dispositif de commande de moteur électrique (11) lorsqu'il est déterminé au moyen du dispositif de détermination (15) que le véhicule (100) ne se déplace pas.

15. Procédé selon la revendication 14, comprenant en outre le fait d'amener, après la désactivation du dispositif de commande de moteur électrique (11), au moyen du dispositif de commande (10), le dispositif de détermination (15) à déterminer en continu si le véhicule (100) se déplace ou non et, lorsqu'il est déterminé au moyen du dispositif de détermination (15) que le véhicule (100) se déplace, l'activation du dispositif de commande de moteur électrique (11) par le dispositif de commande (10) pour commander le moteur électrique (102) afin d'arrêter le déplacement du véhicule (100) et de maintenir l'état arrêté du véhicule (100).

16. Procédé selon l'une quelconque des revendications 11 à 15, dans lequel la détermination, au moyen du dispositif de détermination (15), du fait de savoir si le véhicule (100) se déplace ou non comprend la détection d'une position de rotation d'un rotor du moteur électrique (102) et/ou la détection d'une vitesse de rotation d'une roue (101) du véhicule (100), et la détermination, au moyen du dispositif de détermination (15), que le véhicule (100) se déplace lorsque la position de rotation du rotor du moteur électrique (102) varie ou que la vitesse de rotation de la roue (101) est différente de zéro.

17. Procédé selon l'une quelconque des revendications 11 à 16, dans lequel le dispositif de blocage (110, 111, 112) est un verrou de stationnement (111) pouvant être activé par une commande électronique pour bloquer un arbre de sortie (103) du moteur électrique (102) ou un verrou de stationnement (112) pouvant être activé par une commande électronique pour bloquer une transmission (105) du véhicule (100) ou un frein de stationnement (110) pouvant être activé par une commande électronique pour bloquer au moins une roue (101) du véhicule (100).

18. Procédé selon l'une quelconque des revendications 11 à 17, dans lequel le dispositif de commande (10) détermine si le dispositif de blocage (110, 111, 112) a été activé ou non sur la base d'une position d'un actionneur du dispositif de blocage (110, 111, 112).

19. Procédé selon l'une quelconque des revendications 11 à 18, dans lequel un couple du moteur électrique (102) est régulé au moyen du dispositif de commande (10) afin d'arrêter le déplacement du véhicule (100) et de maintenir l'état arrêté du véhicule (100).
